## Europäisches Patentamt
## European Patent Office
## Office européen des brevets

(11) Veröffentlichungsnummer: **0 025 529**
**B1**

(12) **EUROPÄISCHE PATENTSCHRIFT**

(45) Veröffentlichungstag der Patentschrift:
**17.04.85**

(51) Int. Cl.⁴: **G 01 J 5/20,** H 01 C 7/00,
H 01 C 17/06

(21) Anmeldenummer: **80105109.5**

(22) Anmeldetag: **28.08.80**

(54) Bolometrischer Strahlungsempfänger und Verfahren zu seiner Herstellung.

(30) Priorität: **12.09.79 DE 2936862**

(43) Veröffentlichungstag der Anmeldung:
**25.03.81 Patentblatt 81/12**

(45) Bekanntmachung des Hinweises auf die Patenterteilung:
**17.04.85 Patentblatt 85/16**

(84) Benannte Vertragsstaaten:
**AT BE CH DE FR GB IT LI NL SE**

(56) Entgegenhaltungen:
DE - A - 2 211 699
GB - A - 1 319 765
US - A - 3 061 476
US - A - 3 069 644
US - A - 4 129 848

ELEKTRONIK, Band 28, Heft 11, 31. Mai 1979,
MÜNCHEN (DE), "Hochempfindliches Bolometer",
Seite 11
APPLIED PHYSICS LETTERS, Band 17, Heft 10, 15.
November 1970, NEW YORK (US), B. CONTRERAS et al.:
"Nanosecond response time room-temperature infrared
detection with thin-film bolometers", Seiten 450-452
ELECTRONICS, Band 51, Heft 16, 3. August 1978, NEW
YORK (US), D. BRUCK et al.: "Why the design nod goes
to resistors made as thin film monolithic networks",

(73) Patentinhaber: **Battelle-Institut e.V., Am
Römerhof 35 Postfach 900 160,
D-6000 Frankfurt/Main 90 (DE)**

(72) Erfinder: **Hartmann, Rolf, Am Hohenstein 2,
D-6233 Kelkheim (DE)**
Erfinder: **Krah, Albrecht, Hermann-Löns-Strasse 16,
D-6480 Wächtersbach (DE)**
Erfinder: **Egle, Hilda, Leipziger Ring 6,
D-6056 Heusenstamm (DE)**

(74) Vertreter: **Rupprecht, Klaus, Dipl.-Ing., Am Römerhof 35,
D-6000 Frankfurt (Main) 90 (DE)**

(56) Entgegenhaltungen: (Fortsetzung)
**Seiten 99-104
PATENTS ABSTRACTS OF JAPAN, Band 2, Heft 84, 8.
August 1978, Seite 3673E78**

Beschreibung

Die Erfindung betrifft einen bolometrischen Strahlungsempfänger, der im wesentlichen aus einer dünnen, temperaturempfindlichen und elektrisch leitfähigen Meßschicht besteht, sowie ein Verfahren zu seiner Herstellung. Das erfindungsgemäße Bolometer eignet sich insbesondere für den infraroten Spektralbereich.

Thermische Strahlungsempfänger für das Infrarotgebiet sind für viele Anwendungszwecke unentbehrlich, trotz der großen Fortschritte, die auf dem Gebiet der gekühlten Quantendetektoren inzwischen erzielt wurden. Der Vorteil thermischer Strahlungsempfänger liegt in der Unabhängigkeit ihrer Strahlungsempfindlichkeit von der Wellenlänge und von der Umgebungstemperatur.

Es sind verschiedene Arten von thermischen Strahlungsempfängern bekannt. Solche, die den pyroelektrischen Effekt bestimmter Kristalle ausnützen, können nur dann erfolgreich eingesetzt werden, wenn einerseits die Umgebungstemperatur weit genug unter der Curie-Temperatur des Kristalls liegt und andererseits die Schwankungen der Umgebungstemperatur einen bestimmten Wert von etwa 0,5° K/min nicht überschreiten.

Wegen des einfachen und robusten Aufbaus werden Thermoelemente und Bolometer bevorzugt, wobei dem Bolometer noch der Vorteil der gleichmäßigen Empfindlichkeit über die gesamte Empfängerfläche, der gegebenenfalls höheren Impedanz und der Verkürzung der Einstellzeit durch Erhöhung der Arbeitstemperatur zukommt.

Das Bolometer stellt im allgemeinen einen geschwärzten, bandförmigen Leiter aus einem Metall mit möglichst hohem Temperaturkoeffizienten des elektrischen Widerstands dar. Die Widerstandsänderung infolge Erwärmung durch Einstrahlung wird mit Hilfe einer Brückenschaltung gemessen. Wegen der einfachen Verarbeitung erweist sich Gold als vorteilhafter Leiterwerkstoff. Rein metallische Leiter haben den wesentlichen Vorteil, daß die Empfindlichkeit des Empfängers (Signal-Rausch-Verhältnis) nur durch das Johnson-Rauschen des Bolometerwiderstandes begrenzt wird. Bei sonst gleichbleibenden Parametern ist das Verhältnis von Signal zu Rauschen unabhängig vom Ohm'schen Widerstand des Bolometers. Die Signalhöhe ist jedoch von der Strahlungskonzentration, d. h. vom Quadrat des Abbildungsmaßstabs der Lichtquelle auf das Bolometer, abhängig. Der dazu notwendigen Verkleinerung des Bolometers sind bei der Herstellung nach bisherigen Verfahren nicht zu unterschreitende mechanische Grenzen gesetzt. In der Folge werden bisher schon bei mäßig kleinen Dimensionen der Innenwiderstand zu klein, die Wärmekapazität und damit die Einstellzeit zu groß, ebenso ist die Wärmeableitung über die Halterung des Bolometerstreifens viel zu hoch.

Aus »Elektronik, Bd. 28, (1979) Nr. 11, S. 11« ist ein bolometrischer Strahlungsempfänger bekannt, der eine dünne temperaturempfindliche und elektrisch leitfähige Meßschicht besitzt, welche auf einer elektrisch isolierenden Trägerfolie aufgebracht ist. Außerdem wird ein Rahmen vorgesehen, auf dem die Trägerfolie frei aufgespannt ist. In DE-A-2 211 699 werden Thermoelement-Strahlungsempfänger in Schichtform auf Trägerfolien aufgebracht, welche über einen Rahmen freitragend gespannt sind. Schließlich wird in »Patents Abstracts of Japan, Bd. 2, Heft 84, S. 3673 E 78« beschrieben, bei der Herstellung eines Bolometers eine Meßschicht vor der Ausbildung des Fensters im Substrat auf dieses aufzubringen. Es wird nicht erkannt, daß die Größe des Fensterausschnitts und damit die Größe der Trägerfolie im Vergleich zu der Meßschicht einen wesentlichen Einfluß auf die Empfindlichkeit des Strahlungsempfängers ausübt.

Der Erfindung liegt die Aufgabe zugrunde, ein Bolometer bereitzustellen, das die Nachteile bekannter Anordnungen nicht aufweist. Zur Herstellung hochempfindlicher, extrem kleiner und schneller Bolometer ist ferner ein den Forderungen angepaßtes Verfahren zu schaffen. Insbesondere soll mit dem erfindungsgemäßen Verfahren durch Verminderung der Massen bzw. der Wärmekapazität der Anordnung eine kurze Einstellzeit, verbunden mit hoher Empfindlichkeit erzielt und durch geeignete Gestaltung des temperaturempfindlichen Leiters dessen Ohm'scher Widerstand erhöht werden, so daß die bei gröberem Aufbau der Bolometer bereits bekannten, werkstoffbedingten Maximalwerte der Empfindlichkeit überschritten werden können.

Die Erhöhung des Bolometerwiderstandes bringt insofern einen erheblichen Vorteil mit sich, daß der sonst übliche Resonanzübertrager zur Leistungs- und Rauschanpassung des Bolometers an den Eingangsverstärker entfallen kann. Mit dem Erreichen des förderlichen Widerstandes gelingt die Anpassung an niederohmige und rauschkompensierte Vorverstärker fast vollständig. Daraus ergibt sich die Möglichkeit, bei photometrischen Vorrichtungen von einer festen, niedrigen Lichtwechselfrequenz loszukommen und die volle, thermodynamisch vorgegebene Bandbreite des Bolometers auszunutzen. Vorrichtungen zur Frequenzanalyse und zur Bandbreitenbegrenzung können dann der Verstärkerkette nachgeschaltet werden.

Das erfindungsgemäße Herstellungsverfahren muß ferner die Realisierung anwendungsbedingter Konfigurationen der Bolometerfläche und deren Größe erlauben bis hinab zu Dimensionen, die dem Auflösungsvermögen optischer Anordnungen im mittleren Infrarot entsprechen. Zugleich muß sich das Herstellungsverfahren zur weitgehenden Mechanisierung eignen, um die Arbeitsgänge bei der Produktion zu rationalisieren und die Exemplarstreuung gering zu halten. Weiterhin muß das Herstellungsverfahren so ausgelegt sein, daß zusammen mit dem Bolometer bzw. dem Mikrobolometer eine stabile Halterung entsteht, so daß diese störungsfrei und raumsparend im optischen Strahlengang untergebracht werden kann.

Es hat sich nun gezeigt, daß diese Aufgaben mit einem bolometrischen Strahlungsempfänger, der im Anspruch 1 genannten Art bzw. mit einem Herstellungsverfahren nach Anspruch 7 gelöst werden können.

Die Abmessungen der auf der Trägerfolie aufliegenden Bolometerfläche liegen zwischen ca. 30 μm und einigen Millimetern. Die Schichtdicken können auf Werte zwischen 20 und 100 nm eingestellt werden.

Im folgenden wird die Erfindung anhand von lediglich einen Ausführungsweg darstellenden Zeichnungen näher erläutert. Es zeigen in schematischer Vereinfachung

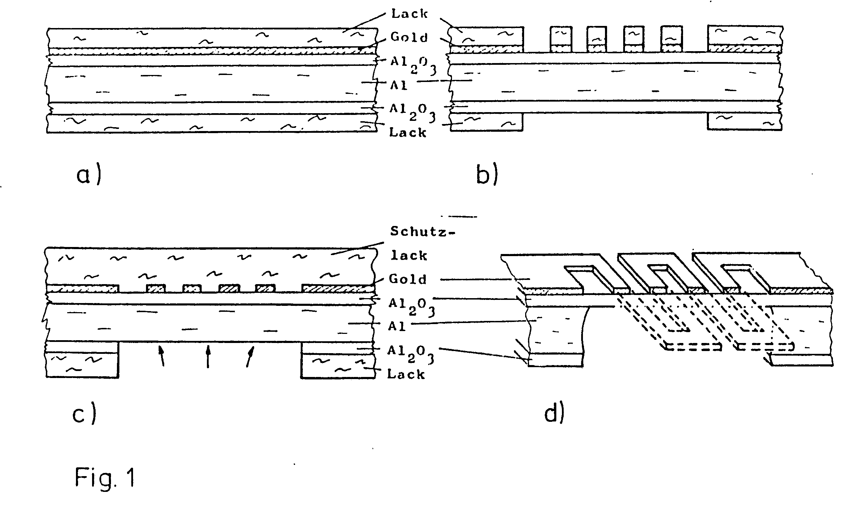

Fig. 1a) bis d) die Darstellung wichtigster Stufen des bevorzugten Verfahrens zur Herstellung eines Dünnschicht-Strahlungsempfängers;

Fig. 2 im Querschnitt den fertigen, nach dem in Fig. 1 dargestellten Verfahren hergestellten Strahlungsempfänger;

Fig. 3 im Querschnitt den erfindungsgemäßen Strahlungsempfänger, der mit einer Fassung im »upside-down«-Verfahren verbunden wird;

Fig. 4 lineare Anordnung von getrennten Meßschichten auf einer einzigen Trägerfolie und

Fig. 5 flächendeckende Anordnung von getrennten Meßschichten auf einer einzigen Trägerfolie.

Die Trägerfolie kann z. B. aus Aluminium-, Beryllium- oder Siliziumoxid bestehen. Im vorliegenden Beispiel geht man von einer nicht zu dicken Aluminiumfolie aus, die für den gesamten Herstellungsprozeß als Substrat dient, von der zum Schluß die fertige Bolometereinheit abgetrennt wird und von der ein Teil in Form eines Ringes als Rahmen für die frei aufzuspannende Trägerfolie dient.

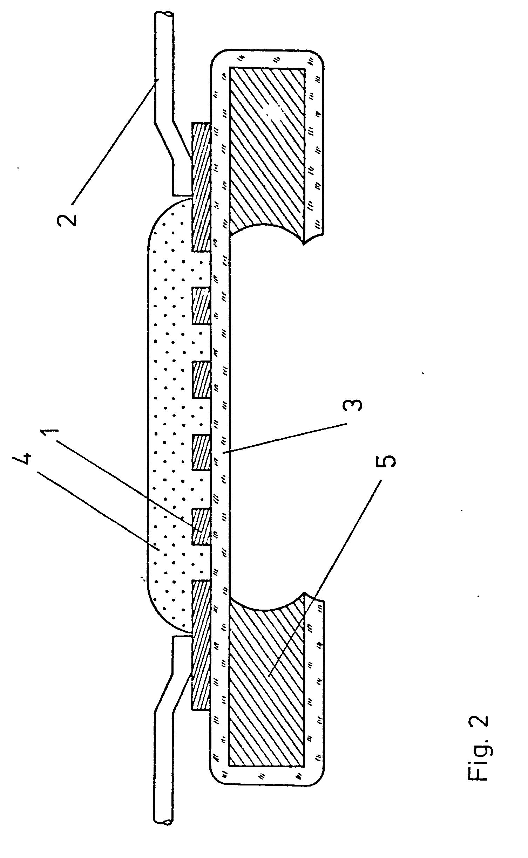

In Stufe a) des in Fig. 2 skizzierten Verfahrens wird die walzblanke Aluminiumfolie poliert, gereinigt und anschließend anodisch oxidiert, was vorzugsweise in Diammoniumhydrogentartrat erfolgt. Die bei der anodischen Oxidation angelegte Spannung beträgt 20 bis 60 V; der Vorgang dauert etwa eine Stunde. Es entsteht dabei eine dichte Oxidhaut, welche die spätere Trägerfolie bildet. Die bei dieser anodischen Oxidation erzeugte Oberfläche des Aluminiums hat die richtigen Eigenschaften, um ohne Zwischenlage eines Haftvermittlers, wie Chrom, die aufzubringende Leiterschicht haftfest zu verankern. Zudem verringert die Oberflächenbeschaffenheit der so erzeugten Oxidschicht die Beweglichkeit der aus der Dampfphase zu kondensierenden Leiterschicht-Atome, z. B. Gold, so daß die für einen hohen Temperaturkoeffizienten schädliche Inselbildung beim Aufdampfvorgang unterbleibt. Auf die Oxidschicht wird die Leiterschicht, z. B. Gold, im Hochvakuum aufgedampft und danach getempert, um die elektrischen Kennwerte denen des kompakten Metalls anzunähern.

In Stufe b) werden mit Hilfe zueinander justierter Photomasken die Bolometerstruktur, z. B. Mäander, auf der Leiterschicht und der Fensterausschnitt auf der Rückseite in zuvor beidseitig aufgezogenen Photolack einbelichtet. Gleichzeitig wird ebenfalls von der Substratrückseite her eine ringförmige Zone einbelichtet, die es später erlaubt, den Rahmen aus dem Aluminiumsubstrat herauszuätzen, über den die freitragende Oxidfolie gespannt und mit ihm fest verbunden sein wird. Diese Rahmenstruktur dient auch zum Einbau der Bolometereinheit in ein Gehäuse. Sie erträgt hohe Vibrationsbeschleunigungen. Die dadurch gewährleistete hohe mechanische Stabilität begründet die Mikrophonie-Unempfindlichkeit des Bolometers. Mit Hilfe der erzeugten Photolackstruktur wird die mäanderförmige Leiterbahn einschließlich der Anschlußfelder für die elektrischen Anschlüsse aus der Leiterschicht herausgeätzt.

Die Leiterschicht selbst wird vorzugsweise in Dicken von 20 bis 25 nm erzeugt, um dem Bolometer einen möglichst hohen Widerstand, geringe Wärmeträgheit und zugleich geringe Exemplarstreuung zu verleihen.

In Stufe c) wird für die Dauer der folgenden Verfahrensschritte die frisch geätzte Leiterbahn mit einem Schutzlack überzogen, wonach die auf der Rückseite des Substrats noch vorhandene Oxidhaut an der Stelle des künftigen Fensters mit Flußsäure entfernt wird.

In Stufe d) wird die die Leiterbahn tragende Oxidhaut auf der Vorderseite des Aluminiumsubstrats freigelegt und zugleich der vorgenannte Ring geätzt. Dies geschieht mit Hilfe konzentrierter Salzsäure, der, um die Auflösung des Aluminiums zu beschleunigen, eine geringe Menge Kupferchlorid beigefügt wird. Die Ätzung erfolgt von der Rückseite des Aluminiumsubstrats her, an den in Stufe b) belichteten und in Stufe c) von der schützenden Oxidschicht befreiten Stellen. Durch das Weglösen des bisher tragenden Aluminiumsubstrats wird das Bolometerscheibchen frei und kann als komplette Einheit herausgenommen werden. Im Abschluß werden die noch verbliebenen Schutz- und Photolackschichten restlos entfernt. Die Schwärzung des Bolometerelements erfolgt bevorzugt mit Campherruß, wodurch auch die thermisch träge Masse des Bolometers gering gehalten wird.

In Fig. 2 wird im Querschnitt ein nach dem oben beschriebenen Verfahren hergestellter Strahlungsempfänger gezeigt. Dieser besteht aus einer mäanderförmigen Leiterbahn 1 mit Anschlußfeldern 2, die von einer Aluminiumoxidfolie 3 getragen wird. Über die Mäanderstruktur wird der Absorber 4 angebracht. An der Stelle, an der die Bolometerstruktur auf der freitragend aufgespannten Oxid-Trägerfolie 3 sitzen soll, ist das Basismaterial fensterartig herausgelöst, so daß die Trägerfolie 3 auf dem einen Rahmen bildenden Rest des Basismaterials 5 frei gespannt zurückbleibt.

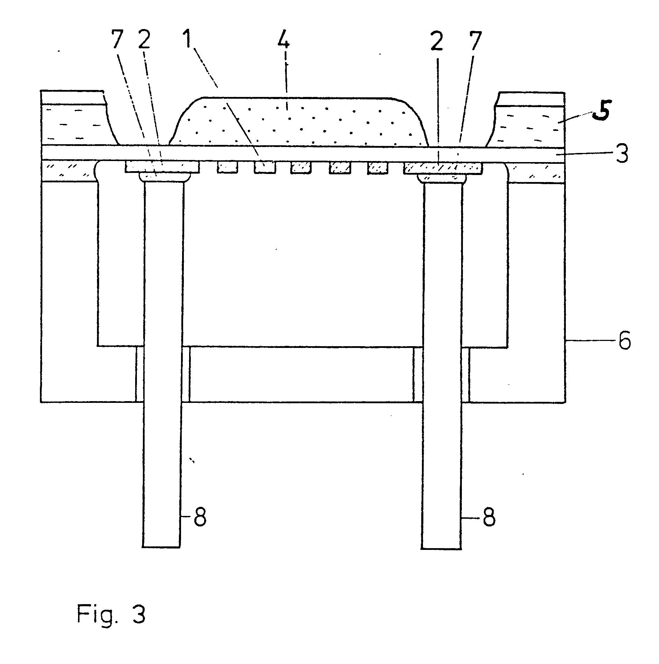

Das fertige Bolometerelement, d. h. Basismaterial mit Fenster, Isolatorfolie 3 und Bolometerstruktur 1 kann auf besonders einfache Weise im »upside-down«-Verfahren auf einer Fassung 6 befestigt werden, wie es in Fig. 3 gezeigt ist. Hierbei werden leitfähige Kleber 7 benutzt. Da die Anschlußfelder 2 mit den Kontaktstiften 8 in Berührung kommen, enthält das Element auch gleichzeitig seine elektrischen Anschlüsse. In diesem Fall ist die Strahlungsabsorbierende Schwarzschicht 4 auf die Rückseite des Bolometerelements aufgetragen.

Die Größe des Fensterausschnitts und damit die Größe der im Haltering frei aufgespannten Trägerfolie 3 hat wesentlichen Einfluß auf die Empfindlichkeit und die Ansprechzeit des Bolometers. Ist die Fensterfläche groß und das Bolometer im Vakuum montiert, wird hohe Empfindlichkeit erreicht. Verkleinert man die Fensterfläche bei gleicher Bolometerfläche, so erhöht sich die Wärmeableitung nach dem Rahmen hin, das Bolometer wird schneller. Somit können die beiden gebräuchlichen Bolometertypen (strahlungs- bzw. wärmeleitungsgekühlt) sowie alle Zwischenformen nach dem gleichen Herstellungsverfahren wahlweise erzeugt werden.

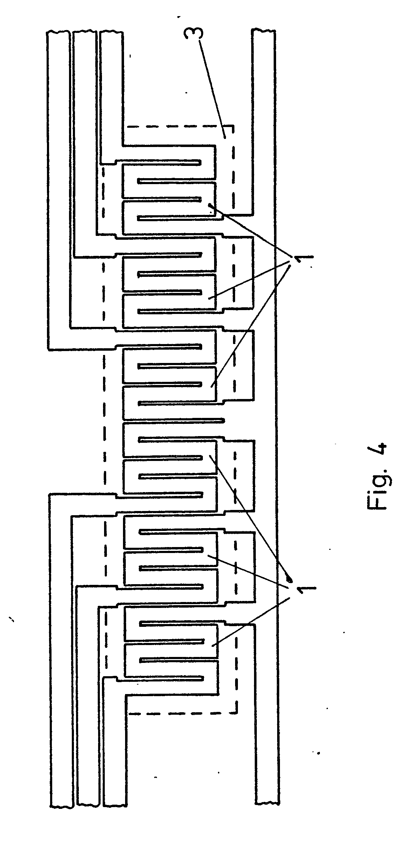

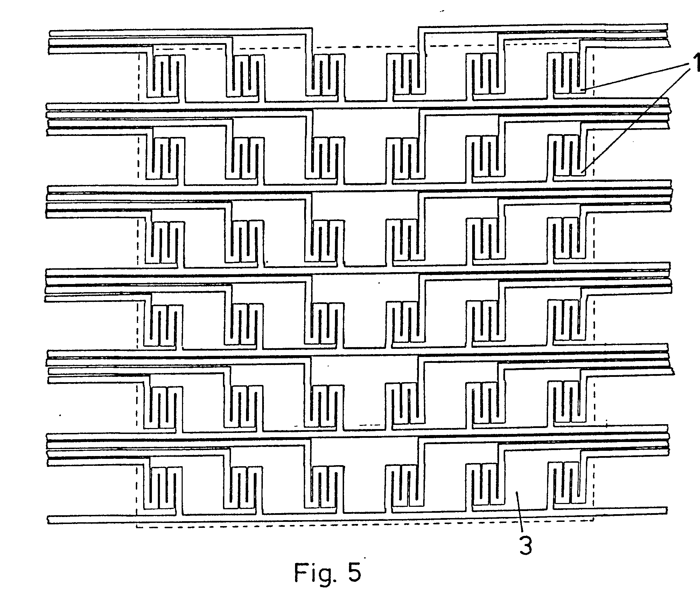

Aus Fig. 4 und 5 geht hervor, daß einzelne, getrennte Meßschichten 1 auf einer einzigen Trägerfolie 3, die als gestrichelte Linie dargestellt ist, linear bzw. flächendeckend angeordnet werden können. Die in Fig. 4 gezeigte lineare Anordnung ermöglicht die Erfassung der Position eines Strahlungssignals längs einer Achse. Die flächendeckende Anordnung gemäß Fig. 5 gestattet die bildhafte Erfassung ausgedehnter Strahlungssignale. Diese Ausführungsformen lassen sich nach dem oben erläuterten Verfahren einfach herstellen, wobei allen einzelnen Meßschichten 1 die Trägerfolie sowie der hier nicht gezeichnete Rahmen aus dem Basismaterial gemeinsam ist. Die Anschlüsse der Meßschichten lassen sich gemeinsam bzw. getrennt führen.

**Patentansprüche**

1. Bolometrischer Strahlungsempfänger mit einem Stützrahmen (5), einer über den Stützrahmen gespannten und einstückig mit diesem verbundenen Trägerfolie (3) aus einem elektrisch isolierenden Material, einer auf der Trägerfolie auf deren dem Rahmen abgewandten Seite vorgesehenen und angeformte Kontaktierungsflächen (2) aufweisenden Meßschicht (1) aus einem elektrisch leitenden Dünnfilm mit temperaturabhängigem Widerstand, dadurch gekennzeichnet, daß die Meßschicht (1) einschließlich der angeformten Kontaktierungsflächen (2) innerhalb des freitragenden, d. h. nicht vom Stützrahmen (5) unterlegten Bereichs der Trägerfolie (3) angeordnet ist.

2. Strahlungsempfänger nach Anspruch 1, dadurch gekennzeichnet, daß die Meßschicht (1) als eine mäanderförmige Leiterbahn ausgebildet ist.

3. Strahlungsempfänger nach Anspruch 1 und 2, dadurch gekennzeichnet, daß die Meßschicht (1) aus Edelmetall, vorzugsweise aus Gold, besteht und eine Dicke von 10 bis 100 nm, vorzugsweise 25 nm, besitzt.

4. Strahlungsempfänger nach einem der Ansprüche 1 bis 3, dadurch gekennzeichnet, daß die Trägerfolie (3) aus einem der Oxide der Elemente Beryllium, Silizium und Aluminium besteht und eine Dicke von weniger als 100 nm aufweist.

5. Strahlungsempfänger nach einem der Ansprüche 1 bis 4, dadurch gekennzeichnet, daß zur Erfassung der Position eines Strahlungssignals längs einer Achse auf einer einzigen Trägerfolie (3) mehrere getrennte Meßschichten (1) nebeneinander angeordnet werden, so daß sie eine Zeile bilden.

6. Strahlungsempfänger nach einem der Ansprüche 1 bis 4, dadurch gekennzeichnet, daß zur bildhaften Erfassung ausgedehnter Strahlungssignale auf einer einzigen Trägerfolie (3) mehrere getrennte Meßschichten (1) zweidimensional flächendeckend angeordnet werden, so daß sie ein Array bilden.

7. Verfahren zur Herstellung eines bolometrischen Strahlungsempfängers nach einem der Ansprüche 1 bis 6, bei dem auf einem Substrat (5) eine einstückig mit diesem verbundene Isolierschicht (3) aus einem elektrisch isolierenden Material erzeugt wird, auf der Isolierschicht eine Meßschicht (1) in Form eines Dünnfilms aus elektrisch leitendem Material mit temperaturabhängigem Widerstand aufgebracht wird, wobei an die Meßschicht Kontaktierungsflächen (2) angeformt werden, in dem Substrat (5) von seiner der Isolierschicht (3) abgewandten Seite her und gegenüber der Meßschicht ein Fenster geöffnet wird, das durch die eine Trägerfolie für die Meßschicht (1) bildende Isolierschicht (3) verschlossen ist, dadurch gekennzeichnet, daß nach dem Aufbringen der Meßschicht (1) aus dieser die Struktur der Leiterbahnen der Meßschicht sowie der Kontaktierungsflächen (2) und aus dem Substrat (5) das Fenster mittels bekannter photolitographischer Techniken herausgeätzt werden und die Größe des Fensters so bemessen wird, daß die Leiterbahnen der Meßschicht (1) einschließlich der angeformten Kontaktierungsflächen innerhalb des freitragenden, die Trägerfolie bildenden Bereichs der Isolierschicht (3) liegen.

8. Verfahren nach Anspruch 7, dadurch gekennzeichnet, daß zum Herausätzen der Leiterbahnen auf die Meßschicht (1) eine in geeigneter Weise strukturierte Maske gelegt wird und die nicht benötigten Stellen der Meßschicht auf chemischem Weg aufgelöst werden.

9. Verfahren nach Anspruch 7, dadurch gekennzeichnet, daß zum Herausätzen der Leiterbahnen auf die Meßschicht (1) eine in geeigneter Weise strukturierte Maske gelegt wird und die nicht benötigten Stellen der Meßschicht auf physikalischem Weg innerhalb einer bei vermindertem Gasdruck brennenden elektrischen, vorzugsweise hochfrequenten Gasentladung durch Kathodenzerstäubung bzw. Sputterätzen abgetragen werden.

10. Verfahren nach einem der Ansprüche 7 bis 9, dadurch gekennzeichnet, daß das Meßschichtmaterial in Form einer mäanderförmigen Leiterbahn geätzt wird.

11. Verfahren nach einem der Ansprüche 7 bis 10, dadurch gekennzeichnet, daß die Isolierschicht (3) aus dem Substrat (5) durch anodische oder thermische Oxidation gebildet wird.

12. Verfahren nach einem der Ansprüche 7 bis 10, dadurch gekennzeichnet, daß die Isolierschicht (3) auf ein artfremdes Substrat (5) nach dem Verfahren der Dünnschicht-Technik aufgebracht wird.

13. Verfahren nach einem der Ansprüche 7 bis 12, dadurch gekennzeichnet, daß die Meßschicht auf dem Weg des Aufdampfens im Hochvakuum gebildet wird.

14. Verfahren nach einem der Ansprüche 7 bis 12, dadurch gekennzeichnet, daß die Meßschicht durch Kathodenzerstäubung gebildet wird.

15. Verfahren nach einem der Ansprüche 7 bis 14, dadurch gekennzeichnet, daß der fertige bolometrische Strahlungsempfänger im »upside-down«-Verfahren auf eine Fassung mittels leitfähiger Kleber befestigt wird und gleichzeitig seine elektrischen Anschlüsse erhält.


**Claims**

1. Bolometric radiation detector with a supporting frame (5), an electrically insulating carrier film (3) supported by the frame and connected in one piece with it, a thin, electrically conductive measuring layer (1) with temperature-sensitive resistance arranged on the antiframe surface of the carrier film and having contacting panels (2), characterized in that the measuring layer (1) including the contacting panels (2) are arranged within the free-supporting aera of the carrier film (3), i. e. the aera which is not supported by the frame (5).

2. Radiation detector as claimed in claim 1 wherein the measuring layer (1) is formed as a meander-shaped conductor.

3. Radiation detector as claimed in claim 1 and 2 wherein the measuring layer (1) is composed of a noble metal, preferably of gold, and is between 10 and 100 nm, preferably 25 nm, thick.

4. Radiation detector as claimed in any of the claims 1 to 3 wherein the carrier film (3) consists of an oxide of beryllium, silicon and aluminium, and is less than 100 nm thick.

5. Radiation detector as claimed in any of the claims 1 to 4 wherein, in order to determine the position of a radiation signal, several separate measuring layers (1) are arranged adjacent to each other along an axis on a single carrier film (3) so as to form a linear array.

6. Radiation detector as claimed in any of the claims 1 to 5 wherein, in order to obtain an image of extended radiation signals, several separate measuring layers (1) are arranged over the entire face of a single carrier film (3) in two dimensional manner so as to form an array.

7. Method of producing a bolometric radiation detector as claimed in any of the claims 1 to 7 comprising forming an electrically insulating layer (3) on a base material (5) being in one piece connected with the base material, applying a thin, electrically conductive measuring layer (1) with a temperatur sensitive resistance over the insulating layer, forming contacting panels (2) at the measuring layer, producing a window on the base material (5) from the reverse side of the insulating layer (3) and opposite to the measuring layer, the window being closed by the insulating layer (3) serving as a carrier film for the measuring layer (1), characterized in that after applying the measuring layer (1) the structure of the conductors of the measuring layer and of the contacting panels (2) are etched out of the measuring layer and a window is etched out of the base material (5) using known photolithographic methods and the size of the window is such that the conductors of the measuring layer (1) including the formed contacting panels are within the free-supporting, carrier film-forming aera of the insulating layer (3).

8. Method as claimed in claim 7 wherein, in order to etch out the conductors, a correspondingly formed mask is laid on the measuring layer and the parts of the measuring layer which are not required are chemically dissolved.

9. Method as claimed in claim 7 wherein, in order to etch out the printed conductors a correspondingly formed mask os laid on the measuring layer and wherein the parts of the measuring layer which are not required are removed by a physical method by sputtering or sputter etching within an electric, preferably highfrequency gas discharge burning at a reduced gas pressure.

10. Method as claimed in any of the claims 7 to 9 wherein the measuring layer is etched in the form of a meander-shaped conductor.

11. Method as claimed in any of the claims 7 to 10 wherein the insulating layer (3) is formed from the base material (5) by anodic or thermal oxidation.

12. Method as claimed in any of the claims 7 to 10 wherein the insulating layer (3) is applied to a different type of base material (5) by the thinlay-er technique.

13. Method as claimed in any of the claims 7 to 12 wherein the measuring layer is formed by evaporation in a high vacuum.

14. Method as claimed in any of the claims 7 to 12 wherein the measuring layer if formed by sputtering.

15. Method as claimed in any of the claims 7 to 14 wherein the finished bolometric radiation detector is fixed to a socket by means of conductive adhesives in an upside-down process and its electrical contacts are provided at the same time.

## Revendications

1. Récepteur bolométrique de rayonnement, avec un cadre d'appui (5), une feuille de support (3) en un matériau électriquement isolant tendue sur le cadre et en une seule pièce avec celui-ci, une couche de mesure (1) sous forme de film mince conducteur électrique, avec résistance dépendante de la température, étant prévue sur la feuille de support sur sa face opposée au cadre, et présentant des surfaces de contact (2) moulées sur elle, récepteur bolométrique caractérisé en ce que la couche de mesure (1), y compris les surfaces de contact (2) moulées sur elle, est disposée à l'intérieur de domaine auto-portant, c'est-à-dire non soutenu par le cadre d'appui.

2. Récepteur de rayonnement suivant la revendication 1, caractérisé en ce que la couche de mesure (1) est constituée par une bande conductrice en forme de méandre.

3. Récepteur de rayonnement suivant l'une des revendications 1 et 2, caractérisé en ce que la couche de mesure (1) est constituée en un métal noble, notamment en or, et elle possède une épaisseur d'environ 10 à 100 n.m. notamment 25 n.m.

4. Récepteur de rayonnement suivant l'une quelconque des revendications 1 à 3, caractérisé en ce que la feuille de support (3) est constituée en l'un des oxydes des éléments du béryllium, silicium et aluminium et elle présente une épaisseur inférieure à 100 n.m.

5. Récepteur de rayonnement suivant l'une quelconque des revendications 1 à 4, caractérisé en ce que, pour saisir la position d'un signal de rayonnement le long d'un axe, sur une unique feuille de support (3), plusieurs couches de mesure séparées (1) sont disposées l'une près de l'autre de manière à former une ligne.

6. Récepteur de rayonnement suivant l'une quelconque des revendications 1 à 4, caractérisé en ce que pour saisir sous forme d'image des signaux de rayonnement étalés sur une unique feuille de support (3), plusieurs couches de mesure séparées (1) sont disposées en surfaces de recouvrement bi-dimensionnelles de manière à former une rangée.

7. Procédé pour la fabrication d'un récepteur de rayonnement bolométrique, suivant l'une quelconque des revendications 1 à 6, dans lequel, sur un substrat (5) on réalise une couche isolante (3) en matériau électriquement isolant reliée au substrat, on applique sur cette couche isolante une couche de mesure (1) sous la forme d'un film mince en matériau électriquement conducteur ayant une résistance dépendante de la température, des surfaces de contact (2) étant formées dans la couche de mesure, une fenêtre étant ouverte dans le substrat (5) à partir de sa face opposée de la couche isolante (3) et qui est obturée par la couche isolante (3) qui forme une feuille de support pour la couche de mesure (1), procédé caractérisé en ce que, après application de la couche de mesure (1), la structure des bandes conductrices de la couche de mesure ainsi que les surfaces de contact (2) sont attaquées par décapage du substrat (5), la fenêtre est également formée par action chimique au moyen de techniques photo-lithographiques connues, la grandeur de la fenêtre étant choisie telle, que les bandes de conducteur de la couche de mesure (1) y compris les surfaces de contact formées, se trouvent à l'intérieur du domaine de la couche isolante (3) auto-portant qui forme la feuille de support.

8. Procédé suivant la revendication 7, caractérisé en ce que par attaque chimique des bandes conductrices sur la couche de mesure (1) on dispose des masques de structure appropriée, et les emplacements non nécessaires de la couche de mesure sont dissouts par action chimique.

9. Procédé suivant la revendication 7, caractérisé en ce que par attaque des bandes conductrices sur la couche de mesure (1), on place un masque de structure appropriée et les emplacements non nécessaires de la couche de mesure sont enlevés par voie physique, à l'intérieur d'une décharge gazeuse électrique, de préférence à haute fréquence, brûlant avec une pression abaissée du gaz, qui est appliquée par vaporisation cathodique ou par gravure par crépitement.

10. Procédé suivant l'une quelconque des revendications 7 à 9, caractérisé en ce que le matériau de la couche de mesure est réalisé par décapage sous la forme d'une bande conductrice en forme de méandre.

11. Procédé suivant l'une des revendications 7 à 10, caractérisé en ce que la couche isolante (3) est formée sur le substrat (5) par oxydation anodique ou thermique.

12. Procédé suivant l'une des revendications 7 à 10, caractérisé en ce que la couche isolante (3) est rapportée sur un substrat (5) de type différent par la technique dite »des couches minces«.

13. Procédé suivant l'une des revendications 7 à 12, caractérisé en ce que la couche de mesure est formée par voie de vaporisation sous vide élevé.

14. Procédé suivant l'une des revendications 7 à 12, caractérisé en ce que la couche de mesure est formée par vaporisation cathodique.

15. Procédé suivant l'une quelconque des revendications 7 à 14, caractérisé en ce que le récepteur de rayonnement bolométrique terminé est fixé par une opération de retournement »sens dessus-dessous« sur une monture, au moyen d'adhésifs conducteurs et il contient en même temps ses raccords de branchement électriques.

Lack
Gold
$Al_2O_3$
Al
$Al_2O_3$
Lack

a)

b)

Schutzlack
Gold
$Al_2O_3$
Al
$Al_2O_3$
Lack

c)

d)

Fig. 1

Fig. 2

Fig. 3

Fig. 4

Fig. 5